# EUROPEAN PATENT APPLICATION

(11) **EP 1 491 397 A2**
(43) Date of publication of application: **29.12.2004**
(21) Application number: 04076074.6
(22) Date of filing: 06.04.2004
(51) Int. Cl.: B60P 3/025

(54) **Mobile vending unit**

(30) Priority: 23.06.2003 GB 0314612
(71) Applicant: Benjy's Group Limited, London EC3V 3ND (GB)
(72) Inventor: Piper, John, London SW6 6NZ (GB); Everitt, Stephen, Northbourne Nr. Deal, Kent CT14 0LJ (GB); Faulkner, Ian, Woodburn Moor, Bucks HP10 0PB (GB); Rickwood, Emma, London EC3V 3ND (GB); Rickwood, Ian, London EC3V 3ND (GB)
(74) Representative: Carter, Stephen John

(57) **Abstract**

A mobile vending unit having a load space for storing and/or displaying products. The load space is accessible via two opening doors, the doors being respectively located on a side wall and a rear wall of the load space.

## Description

### Field of the Invention

The present invention relates vehicles and more specifically vehicles, whether self propelled or not, for use as mobile vending units.

### Background

Mobile vending units are commonly used for the supply of refreshments (food and/or drinks, etc) at open air locations, for example at open air events or at various locations along a 'delivery route', such as offices, warehouses and other commercial establishments. Particularly where the vending unit is employed to supply multiple locations in a short time period (e.g. during the course of a morning), it would be normal for the unit to be self-propelled.

Known self-propelled vending units take the form of a van (or truck), a rear portion of the van being adapted to store and, when parked, display the refreshments for sale. The items for sale are displayed on shelves or in cabinets mounted within the rear portion of the van, accessible through an opening in the side of the van.
The opening is typically closed whilst the vehicle is in transit by a roller door or a door that is hinged at its top to open upwardly to reveal the display space within the van.

Whilst such "snack trucks" enable the efficient delivery of refreshments to multiple locations in a short period of time, they do have their drawbacks.

For instance, as it is usually impractical to use large trucks, the display space for the refreshments is necessarily limited and access to them restricted. The range of refreshments is often consequentially limited or it is not possible to display the complete range of available refreshments to the customers.

The appearance of the trucks is also generally not very appealing to the customer, which may unjustly reflect badly on the quality of the refreshments that are being sold and result in fewer sales than might otherwise be the case.

### Summary of the Invention

It is a general aim of the present invention to provide a vehicle, especially a mobile vending unit, offering advantages (functional, aesthetic or otherwise) over known mobile vending units, including those of the "snack truck-type" discussed above.

In a first aspect the invention provides a mobile vending unit comprising a load space for storing and/or displaying products (e.g. refreshments), the load space being accessible via two opening doors, the doors being respectively located on a side wall and a rear wall of the load space.

In this aspect it is preferred that a common portion of the load space can be accessed via both of the doors. Conveniently, a display unit or cabinet can be mounted in this common portion of the load space, allowing customers access to products in that display unit or cabinet through either door.

The two doors can take any of a number of forms (roller doors, sliding doors, side or top hinged doors, etc) and need not be of the same type as one another. It is particularly preferred, however, that one, or more preferably both of the doors are hinged at their upper edge so that they open upwardly to form a canopy above the opening that they reveal.

Where both doors open upwardly in this manner it will be appreciated that they each offer shelter from e.g. rain or sun. Conveniently, a further canopy may be provided to extend from one door to the other when they are open, to provide a sheltered area extending around a corner of the load space from one door opening to the other.

Where one or both doors open in the described manner, the inner face of the or each door (i.e. the face that is on the underside of the door when it is open and serving as a canopy) may conveniently be fitted with electric lamps that can be used to illuminate the area below.

In a second aspect, the present invention provides a mobile vending unit comprising a load space for storing and/or displaying products, the load space being accessible via a door that is hinged at its upper edge such that when open it forms a canopy above an opening providing access to the load space, one or more electric lamps being mounted on the inner face of the door (i.e. the face that is on the underside of the door when it is open).

In a third aspect the invention provides a mobile vending unit comprising a load space for storing and/or displaying products, the load space being accessible via an opening, the vending unit further comprising a display and/or storage unit that is displaceably mounted within the load space such that it can be moved from a stowed position within the load space to a deployed position in which it extends at least partly outside the load space.

The display and/or storage unit may, for instance, be a sliding unit (such as a sliding draw or shelf). More preferably the unit pivots about a vertical axis at or adjacent one of its side edges, to swing outwardly from the load space in the manner of a door. In some embodiments, this storage and/or display unit may in fact serve as a door, either for the load space itself or for a further storage and/or display unit mounted within the load space.

Preferably the vending unit has multiple storage and/or display units that can be deployed in this manner through one or more openings in the load space.

In a fourth aspect, the invention provides a mobile vending unit comprising a load space for storing and/or displaying products, the load space being accessible via an opening, the vending unit further comprising a counter unit having a stowed position in which it is within the load space and which can be extracted to a deployed position in which it extends from the load space to provide a counter surface.

Preferably the counter unit is hinged such that it can be hinged outwardly from its stowed position to its deployed position. In a particularly preferred form, the counter unit is mounted within an opening in the load space that extends above a wheel of the vending unit, the counter unit being arranged such that when it is deployed it conceals the wheel.

In a fifth aspect, the present invention provides a mobile vending unit comprising a load space for storing and/or displaying products, the vending unit further comprising an automatic vending machine mounted within the load space and being accessible from outside the load space through an opening. The vending machine may, for instance, be a hot beverage machine (e.g. a 'bean to cup' or other coffee machine)

Preferred embodiments of the invention may employ one or any combination of two or more of the various aspects of the invention (and their preferred features) set out above.

Vehicles in accordance with embodiments of the invention may take the form of a trailer or similar unit that is towed or carried by a separate powered vehicle, but more preferably the vehicle is self-propelled. The vehicle may, for instance, be a van or truck that is powered by a petrol, diesel or LPG engine, electric motor or other power plant (e.g. a hybrid of two or more of the above).

### Brief Description of the Drawings

An embodiment of the invention is described below, by way of example, with reference to the accompanying drawings in which:
Figure 1 illustrates a 'snack truck' according to an embodiment of the present invention in a 'stowed' configuration (appropriate for travel on a highway); and
Figure 2 illustrates the 'snack truck' of Figure 1 in a deployed configuration.

### Description of an Embodiment

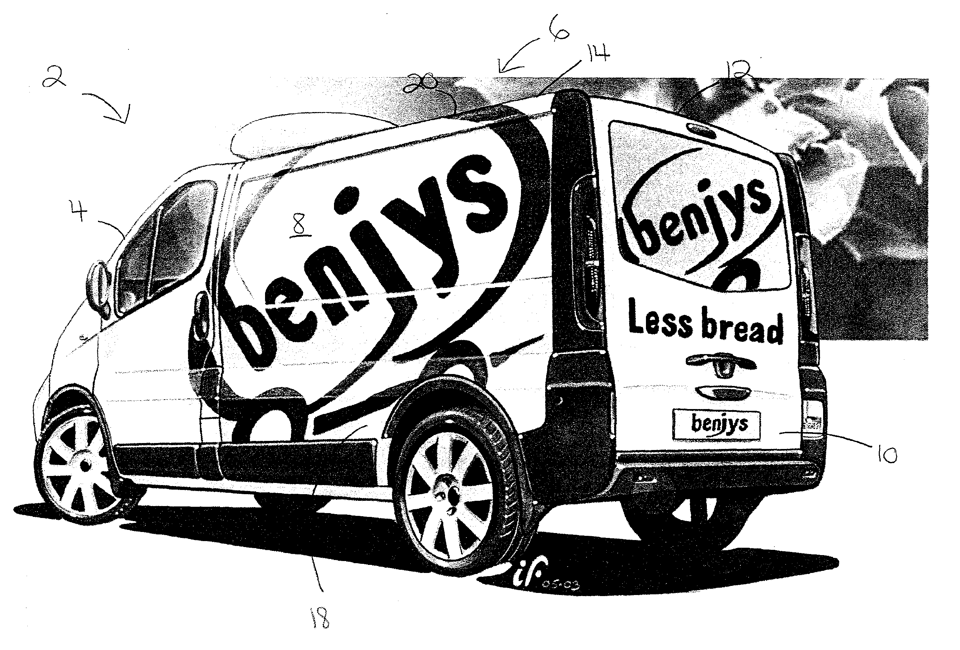

Figure 1 shows the 'snack truck' 2 in its stowed configuration. In this configuration the van can be driven on the highways in a normal manner by a driver in the cab part 4 of the van. The rear part 6 of the van, behind the cab, is a load space 8 for refreshments (food, drinks, etc) housed in a number of storage and display units which are themselves mounted within the load space 8.

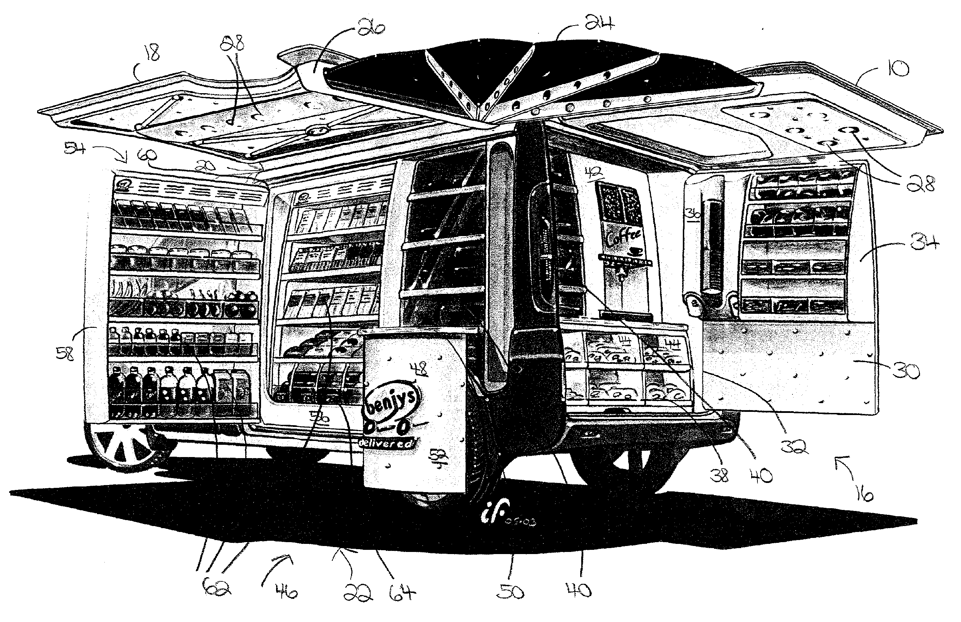

When the van 2 has been driven to a location at which the refreshments it carries are to be sold, it is reconfigured (manually in this example, although in other embodiments some or all of the deployment may be effected in an automated or assisted manner using appropriate actuators) into its deployed configuration, shown in Figure 2.

More specifically, a rear (tailgate) door 10, which is hinged at its upper edge 12 to the body 14 of the load space, is opened upwardly to a horizontal position, revealing a rear opening 16 giving access to the load space. As seen in Figure 2, in this position the rear door 10 forms a first canopy portion above the rear opening 16.

Likewise, a side door 18, which in this example extends the full length of the load space and is also hinged at its upper edge 20, is opened upwardly to a horizontal position to reveal a side opening 22 of the load space. When open, the side door 18 forms a second canopy portion above the side opening 22.

A fan-like canopy 24 is then deployed to span the gap between the rear and side doors 10,18 (first and second canopy portions) to form a substantially continuous canopy extending along the rear, around the corner and along the side of the load space to provide shelter (e.g. from rain of the sun) for customers selecting refreshments from the van. Whilst the illustrated a fan-like canopy is particularly convenient, other forms of canopy may be used (e.g. rigid or semirigid sheets or other fabric shades with appropriate supports and fixings).

The fan-like canopy 24 can conveniently be stowed, when not in use, within a canopy housing 26 mounted to one of the doors adjacent (in the illustrated example the housing can be seen on the inside, rear edge of the side door 18).

A series of electric lamps 28 are mounted in the inner face or each door 10,18 (i.e. the underside of the doors when they are deployed in their horizontal, open positions). These lamps 28 illuminate the area under the canopy.

When the rear door 10 is opened, it reveals a first pivoting storage and display unit 30 within the rear opening 16 of the load space. This unit 30 can be swung outwardly about its right hand edge 32, from its stowed position within the load space to a deployed position (illustrated in Fig. 2) in which it extends perpendicularly out from the rear opening 16 of the load space. In this example, this unit 30 carries a series of open shelves 34 and a cup dispenser 36, but various other storage or display components may take their place or be provided in addition if desired.

Behind the first pivoting storage and display unit 30, within the load space (and revealed when the first unit is deployed as in Fig. 2), are further storage and display units 38,40 and a 'bean to cup' coffee maker 42. A lower storage and display unit 38 includes a plurality of sliding drawers 44, having transparent (e.g. Perspex) fronts in order that the products they contain can be seen even when the drawers 44 are closed.

The coffee machine 42 is mounted on the top of the lower unit 38, as is a corner storage and display unit 40 that sits adjacent the coffee machine 42. This corner unit 40 includes a series of enclosed shelves, the walls of the unit being transparent as with the draw fronts of the lower unit, and can be accessed from both the rear and side openings 16,22. If desired, this corner unit 40 may be a heated cabinet.

As with the rear door 10, opening the side door 18 reveals further storage and display units 46. A counter unit 48 is also revealed. The counter unit 48 has a hinged counter top 50 and, suspended from the counter top, a counter skirt 52. In its stowed position (not shown), the counter unit 48 is folded into the load space in the side opening 22 towards the rear of the load space by the corner cabinet 40. When deployed (as seen in Fig. 2), the counter top 50 extends outwardly from the side opening 22, and the counter skirt 52 hangs down outside the load space, below the side opening 22, to hide the rear wheel of the van.

The forward end of the load space on the opening side of the van is occupied by a refrigerated storage and display unit 54 in this example. In a similar manner to a conventional household refrigerator, this unit has a main body 56 (housed within the load space of the van) and a door 58 that is hinged at its left hand (forward) edge 60 so that once the side door 18 of the van is open it can be swung from within the load space to extend perpendicularly outwardly from the side opening 22 (the position seen in Fig. 2).

In this example, both the main body 56 and the door 58 of the refrigerated unit 54 are refrigerated and carry a series of open display shelves 62 for perishable goods (in other examples, only the main body of the unit may be refrigerated). The main body 56 of the unit also has a row of sliding, transparent fronted drawers 64 at its base. When the door 58 of the refrigerated unit 54 is closed, it fully closes the opening in the main body 56 of the unit, which increases the efficiency of the refrigeration minimising the power consumption during transit and helping to prolong the life of the perishable goods it contains.

A further storage space (not seen) is located in the front portion of the load space on the opposite side of the van to the refrigerated unit. This space is not used for displaying goods, but is accessible via an e.g. sliding door (not shown) on the side of the van that cannot be seen.

As will be understood, various modifications can be made to the example specifically described above without departing from the invention. For instance, the specific configuration of the storage and display units within the load space need not be as described above and may be chosen to suit the particular application to which the van is to be put. In some instances it may not be necessary to have a refrigerated unit for example, or a heated cabinet may not be required. Other embodiments of the invention may be used for vending goods other than refreshments, either in addition to or as an alternative to refreshments.

## Claims

1. A mobile vending unit comprising a load space for storing and/or displaying products, the load space being accessible via two opening doors, the doors being respectively located on a side wall and a rear wall of the load space.

2. A mobile vending unit according to claim 1, wherein a common portion of the load space can be accessed via both of the doors.

3. A mobile vending unit according to claim 2, comprising a display unit or cabinet mounted in said common portion of the load space, allowing customers access to products in that display unit or cabinet through either door.

4. A mobile vending unit according to any one of the preceding claims, wherein at least one of the doors is hinged at its upper edge so that it opens upwardly to form a canopy.

5. A mobile vending unit according to claim 4, wherein of the doors are hinged at their respective upper edges so that each door opens upwardly to form a canopy.

6. A mobile vending unit according to claim 5, comprising a canopy that extends from one door to the other when they are open, to provide a sheltered area extending around a corner of the load space from one door opening to the other.

7. A mobile vending unit according to any one of claims 4 to 6, wherein the inner face of the or each door is fitted with electric lamps that can be used to illuminate the area below the door when it is open.

8. A mobile vending unit according to any one of the preceding claims, comprising a display and/or storage unit that is displaceably mounted within the load space such that it can be moved from a stowed position within the load space to a deployed position in which it extends at least partly outside the load space.

9. A mobile vending unit according to claim 8, wherein the display and/or storage unit pivots about a vertical axis at or adjacent one of its side edges, to swing outwardly from the load space.

10. A mobile vending unit according to claim 9, wherein the storage and/or display unit serves as a door for the load space or for a further storage and/or display unit mounted within the load space.

11. A mobile vending unit according to any one of the preceding claims, comprising a counter unit having a stowed position in which it is within the load space and which can be extracted to a deployed position in which it extends from the load space to provide a counter surface.

12. A mobile vending unit according to claim 11, wherein the counter unit is hinged such that it can be hinged outwardly from its stowed position to its deployed position.

13. A mobile vending unit according to claim 12, wherein the counter unit is mounted within an opening in the load space that extends above a wheel of the vending unit, the counter unit being arranged such that when it is deployed it conceals the wheel.

14. A mobile vending unit according to any one of the preceding claims, comprising an automated vending machine mounted within the load space and accessible from outside the load space through an opening.

15. A mobile vending unit comprising a load space for storing and/or displaying products, the load space being accessible via a door that is hinged at its upper edge such that when open it forms a canopy above an opening providing access to the load space, one or more electric lamps being mounted on the inner face of the door.

16. A mobile vending unit comprising a load space for storing and/or displaying products, the load space being accessible via an opening, the vending unit further comprising a display and/or storage unit that is displaceably mounted within the load space such that it can be moved from a stowed position within the load space to a deployed position in which it extends at least partly outside the load space.

17. A mobile vending unit according to claim 16, wherein the display and/or storage unit pivots about a vertical axis at or adjacent one of its side edges, to swing outwardly from the load space.

18. A mobile vending unit comprising a load space for storing and/or displaying products, the load space being accessible via an opening, the vending unit further comprising a counter unit having a stowed position in which it is within the load space and which can be extracted to a deployed position in which it extends from the load space to provide a counter surface.

19. A mobile vending unit according to claim 18, wherein the counter unit is mounted within an opening in the load space that extends above a wheel of the vending unit, the counter unit being arranged such that when it is deployed it conceals the wheel.

20. A mobile vending unit comprising a load space for storing and/or displaying products, the vending unit further comprising an automated vending machine mounted within the load space and being accessible from outside the load space through an opening.

21. A mobile vending unit according to claim 20, wherein the automated vending machine is a hot beverage machine.

22. A mobile vending unit according to claim 21, wherein the automated vending machine is a bean to cup coffee machine.

23. A mobile vending unit according to any one of the preceding claims that is self-propelled.

24. A mobile vending unit substantially as described herein with reference to and/or as illustrated in the accompanying drawings.
